# EUROPEAN PATENT SPECIFICATION

(11) **EP 2 400 372 B1**
(45) Date of publication and mention of the grant of the patent: **15.11.2017**
(21) Application number: 10006443.5
(22) Date of filing: 22.06.2010
(51) Int. Cl.: G06F 3/023, G06F 3/0488

(54) **Inputting symbols into an electronic device having a touch-screen**
Eingeben von Symbolen in eine elektronische Vorrichtung mit einem Berührungsbildschirm
Saisie de symboles dans un dispositif électronique doté d'un écran tactile

(43) Date of publication of application: 28.12.2011
(73) Proprietor: Vodafone Holding GmbH, 40213 Düsseldorf (DE)
(72) Inventor: Breuer, Andreas, 40629 Düsseldorf (DE)
(74) Representative: Ring & Weisbrodt

(56) References cited:
- EP-A1- 2 169 522
- WO-A1-2010/038113
- WO-A2-2004/063833
- US-A- 5 574 482
- US-A1- 2004 104 896
- US-A1- 2007 296 615
- US-A1- 2010 115 448
- US-B1- 6 885 317

## Description

The present invention relates to a graphical user interface for inputting symbols into an electronic device, especially a portable consumer device like a terminal for use in a mobile communication network according to GSM, GPRS, UMTS and/or LTE standard, comprising display means for representing a plurality of selectable keys of a keyboard on the touch-screen, said plurality of keys associated with at least one subset of symbols of a symbol set, and mapping means for selecting a symbol in response to a user input using a one of said plurality of keys associated with at least one subset of symbols of a symbol set.

The present invention further relates to a method for inputting symbols into an electronic device having a touch-screen, especially a portable consumer device like a terminal for use in a mobile communication network according to GSM, GPRS, UMTS and/or LTE standard, comprising: representing a plurality of selectable keys of a keyboard on the touch-screen, said plurality of keys associated with at least one subset of symbols of a symbol set, and mapping for selecting a symbol in response to a user input using a one of said plurality of keys associated with at least one subset of symbols of a symbol set.

Furthermore, the present invention relates to an electronic device, especially a portable consumer device like a terminal for use in a mobile communication network according to GSM, GPRS, UMTS and/or LTE standard, comprising a graphical user interface for inputting symbols into said electronic device according to the present invention, preferably with a method according the present invention.

In the state of the art numerous solutions for inputting symbols into an electronic device, especially a terminal for use in a mobile communication network, are known. For inputting symbols into the device such devices have an input device for inputting commands, text, phone numbers and the like to control the device and/or functions of the device. Especially for a portable consumer device like a terminal for use in a mobile communication network, such devices usually comprise a reduced key keyboard as an input device. A reduces key keyboard thereby usually comprise fewer keys than a standard keyboard for computing devices, for example personal computer and the like. Thus the keys of a reduced key keyboard have to be able to input more than one symbol. In the case of a portable terminal for use in a mobile communication network, which normally comprises a key reduces keyboard, it is possible to input different symbols with one key by pressing this key several times to chose the respective symbol of the symbols which are associated with the key, so called multi-tapping. The input of symbols is accordingly extensive, cumbersome and slowly.
To ease the input of symbols especially when using a key reduced keyboard, different solutions are known in the state of the art, for example systems and/or methods using a prediction algorithm, which guesses what symbol of the symbols associated with a key is wanted to be inputted by a user. Such a system referred to as "T9" is for example disclosed in the EP 0 842 463 B1 or EP 1 256 871 A2. Another such solution referred to as "WordWise" is for example disclosed in the CA 2,353,862 A1. Another such system is disclosed in WO2010/03811 A1. For inputting symbols into an electronic device, especially a portable consumer device like a terminal for use in a mobile communication network, the usage of a touch-screen as an input device respectively input means is known. Such a device is for example disclosed in the US 7,479,949 B2. Usually a touch-screen is an electronic visual output device, that can detect the presence and location of a touch within the screen area respectively display area. The touch-screen sense a touch or contact to the display of the touch-screen by a finger, hand or other passive objects, for example a pen or the like. The US 7,479,949 B2 discloses the possibility to use the touch-screen for so called tap gestures to change or scroll the image displayed on the touch-screen. Further US 7,479,949 B2 discloses the possibility to use the touch-screen for magnifiying or zooming the image displayed on the touch-screen with a so called multi-finger de-pinching gesture. In the state of the art are several types of touch-screen technologies known, for example so called resistive touch-screens, capacitive touch-screens and/or the like. Electronic devices having a touch-screen as an input device thereby provide selectable keys of a keyboard on the touch-screen respectively on the display of the touch-screen. The so far known touch-screens, especially for a terminal for use in a mobile communication network, for example a mobile phone, so far only represents the keys of a keyboard in a manner and/or with functions identical and/or similar to electronic devices having a real keyboard with selectable keys for an input device, for example a reduced key keyboard of a mobile phone according to ISO/IEC 9995-8, related to the assignment of the basic 26 Latin letters "A" to "Z", the numbers "0" to "9" and special characters "*" and "#" to the 12-key telephone keypad, or for example according to a so called QWERTY keyboard layout of a computer, especially according ISO/IEC 9995-3. US2010115448 A1 discloses a touch screen with a keyboard displayed on it, where keys determined to be likely to be subsequently selected may be visually enhanced.

Thus so far known electronic devices having a touch-screen have only adopted respectively transferred the layout and functions of a real keyboard to a keyboard represented by or with the touch-screen.
In view of this state of the art, it is the object of the present invention to improve the input of symbols into an electronic device having a touch-screen, especially concerning an easier, less cumbersome and more intuitive handling for the user, especially concerning input of symbols.
For the technical solution the present invention proposes a graphical user interface for inputting symbols into an electronic device having a touch-screen, especially a portable consumer device like a terminal for use in a mobile communication network according to GSM, GPRS, UMTS and/or LTE standard, comprising display means for representing a plurality of selectable keys of a keyboard on the touch-screen, said plurality of keys associated with at least one subset of symbols of a symbol set, and mapping means for selecting a symbol in response to a user input using a one of said plurality of keys associated with at least one subset of symbols of a symbol set, characterized in that said plurality of keys are associated with a first subset of symbols of a symbol set comprising the most commonly used symbols of the symbol set according the respective used language and with at least one further subset of symbols of the symbol set comprising the residual symbols of the symbol set, whereby the plurality of keys of a one of the associated subsets of symbols of the symbol set are displayed on the touch-screen, and said plurality of keys of a one of the associated subsets of symbols of the symbol set displayed on the touch-screen comprise at least two keys associated with symbols which are changed dynamic depending on the last inputted symbol by using means for automatically determining the next probably intended symbol to be inputted according to a linguistic database of the respective used language.
The invention is based upon the knowledge that thanks to the graphical user interface according to the invention an easier, less cumbersome and more intuitive handling for the user of an electronic device having a touch-screen is achievable, especially since there is no need for only adopting respectively transferring the layout and functions of a real keyboard to a keyboard represented by or with the touch-screen.
The solution according to the invention divides the symbols of a symbol set in a first subset of symbols of the symbol set and at least one further subset of the symbols of the symbol set. The first subset of symbols of the symbol set comprises the most commonly used symbols of the symbol set according the respective used language. The at least one further subset of symbols of the symbol set comprises the residual symbols of the symbol set. With that the solution according the present invention reduces the otherwise given looking for the symbol respectively key which is wanted to be inputted by a user, since the touch-screen displays only a subset of symbols of the symbol set and not all symbols of the symbol set. Thus the user is enabled to input symbols into the electronic device faster. Furthermore, since according to the present invention the plurality of keys of one of the associated subsets of symbols of the symbol set displayed on the touch-screen comprises at least two keys associated with symbols which are changed dynamic depending on the last inputted symbol the inputting of symbols into the electronic device is further improved, since this reduces the effort of the user to look for the next symbol respectively key associated with the symbol to be inputted. This especially reduces the effort of the user to input symbols into the electronic device and makes the input of symbols more intuitive for the user.
An advantageous embodiment of the invention is characterized in that said at least two keys associated with dynamically changeable symbols of the subset of symbols of the symbol set are displayed on the touch-screen in a portion of the touch-screen and/or in a manner which differs from the portion of the touch-screen and/or the manner the other keys associated with symbols of the subset of symbols of the symbol set are displayed on the touch-screen. With that, the user effort, especially concerning looking for the next symbol to be inputted, is further reducible, since said at least two keys associated with dynamically changeable symbols of the subset of symbols of the symbol set are displayed on the touch-screen in an eye-catching fashion. Another advantageous embodiment of the invention is characterized in that said at least two keys associated with dynamically changeable symbols of the subset of symbols of the symbol set are displayed on the touch-screen in a bigger form or size than the other keys associated with symbols of the subset of symbols of the symbol set and/or in an graphical animated form.
Another advantageous embodiment of the invention is characterized by means for an automatic change between the plurality of keys associated with said first subset of symbols of a symbol set comprising the most commonly used symbols of the symbol set according the respective used language and said at least one further subset of symbols of the symbol set comprising the residual symbols of the symbol set, preferable depending on the last inputted symbols, especially preferable by using means for automatically determining the next probably intended symbol to be inputted according to a linguistic database of the respective used language. With this, the handling for inputting symbols is further improved, especially, since change between the subsets of symbols of the symbol set is done automatically.
The plurality of keys associated with symbols of a subset of symbols of the symbol set represents advantageously a reduced key keyboard.
A preferred embodiment of the invention is characterized in that the subset of symbols of a symbol set comprise alphabetic characters corresponding to an array of letters "A" to "Z", numeric characters corresponding to an array of numbers "0" to "9", punctuation symbols and/or special characters, such as a pair of parenthesis "(" and ")", a pair of brackets "[" and "]", a pair of braces "{" and "}" and/or the like. Another embodiment of the invention is characterised by so called emoticons, for example ":-)", ";-(" or the like, as part of a subset of symbols of the symbol set or as a subset of symbols of the symbol set. In another embodiment of the invention currency symbols, for example "€", "$" or the like, are part of a subset of symbols of a symbol set or a subset of symbols of a symbol set.
Another advantageously embodiment of the invention is characterized in that each key of said plurality of keys is associated with one symbol of the subset of symbols of the symbol set or a pair of symbols of the subset of symbols of the symbol set, whereby said pair of symbols are special characters, such as a pair of parenthesis "(" and ")", a pair of brackets "[" and "]", a pair of braces "{" and "}" and/or the like. A preferred embodiment of the invention suggests, that said pair of symbols of parenthesis "(" and ")", a pair of brackets "[" and "]", a pair of braises "}" and "{" and/or the like are selected respectively selectable in response to the general position of said pairs of parenthesis, brackets, braises and/or the like. With this the input of symbols into an electronic device by a user is further improved, especially since the user is suggested the respective part of a pair of symbols automatically.

A further advantageously embodiment of the invention is characterized in that the linguistic database of the respective used language is a relational database, comprising a probability calculation for each symbol of the symbol set concerning the distribution of the symbols to the keys.

Another advantageously embodiment of the invention is characterized by display means for displaying inputted symbols on the touch-screen, preferable in a portion of the touch-screen which is disposed at a distance of the keys displayed on the touch-screen, especially preferable in a portion of the touch-screen which is located above the portion, the keys are displayed in.

Another preferred embodiment of the invention is characterized by means for inputting symbols into said electronic device with kinemimic gestics, preferable direction inducing gestics, preferably realising upper and lower case input and or special character input. With this, the inputting of symbols is further improvable.

Moreover, for the technical solution the present invention relates to a method for inputting symbols into an electronic device having a touch-screen, especially a portable consumer device like a terminal for use in a mobile communication network according to GSM, GPRS, UMTS and/or LTE standard, comprising: representing a plurality of selectable keys of a keyboard on the touch-screen, said plurality of keys associated with at least one subset of symbols of a symbol set, and mapping for selecting a symbol in response to a user input using a one of said plurality of keys associated with at least one subset of symbols of a symbol set; characterized by associating said plurality of keys with a first subset of symbols of a symbol set comprising the most commonly used symbols of the symbol set according the respective used language and with at least one further subset of symbols of the symbol set comprising the residual symbols of the symbol set, thereby displaying the plurality of keys of a one of the associated subsets of symbols of the symbol set on the touch-screen, and displaying said plurality of keys of a one of the associated subsets of symbols of the symbol set on the touch-screen, comprising at least two keys associated with symbols which are changed dynamic depending on the last inputted symbol by using means for automatically determining the next probably intended symbol to be inputted according to a linguistic database of the respective used language.

An advantageously embodiment of the invention is characterized by displaying said at least two keys associated with dynamic changeable symbols of the subset of symbols of the symbol set on the touch-screen in a portion of the touch-screen and/or in a manner, which differs from the portion of the touch-screen and/or the manner the other keys associated with symbols of the subset of symbols of the symbol set are displayed on the touch-screen. With that, the user effort, especially concerning looking for the next symbol to be inputted, is further reducible, since said at least two keys associated with dynamic changeable symbols of the subset of symbols of the symbol set are displayed on the touch-screen in an eye-catching fashion. A preferred embodiment is characterized by displaying said at least two keys associated with dynamic changeable symbols of the subset of symbols of the symbol set on the touch-screen in a bigger form or size than the other keys associated with symbols of the subset of symbols of the symbol set and/or in an graphical animated form.

Another advantageous embodiment of the invention is characterized by an automatic change between the plurality of keys associated with said first subset of symbols of a symbol set comprising the most commonly used symbols of the symbol set according the respective used language and said at least one further subset of symbols of the symbol set comprising the residual symbols of the symbol set, preferable depending on the last inputted symbols, especially preferable by using means for automatically determining the next probably intended symbol to be inputted according to a linguistic database of the respective used language. With this, the handling for inputting symbols is further improved, especially, since change between the subsets of symbols of the symbol set is done automatically.

Another advantageous embodiment of the invention suggests that the plurality of keys associated with symbols of a subset of symbols of the symbol are representing a reduced key keyboard.

A further preferred embodiment of the invention is characterized in that the subset of symbols of a symbol set comprise alphabetic characters corresponding to an array of letters "A" to "Z", numeric characters corresponding to an array of numbers "0" to "9", punctuation symbols and/or special characters, such as a pair of parenthesis "(" and ")", a pair of brackets "[" and "]", a pair of braces "{" and "}" and/or the like. Another embodiment of the invention is characterised by so called emoticons, for example ":-)", ";-(" or the like, as part of a subset of symbols of the symbol set or as a subset of symbols of the symbol set. In another embodiment of the invention currency symbols, for example "€", "$" or the like, are part of a subset of symbols of a symbol set or a subset of symbols of a symbol set.

Another advantageously embodiment of the invention is characterized by associating each key of said plurality of keys with one symbol of the subset of symbols of the symbol set or a pair of symbols of the subset of symbols of the symbol set, whereby said pair of symbols are special characters, such as a pair of parenthesis "(" and ")", a pair of brackets "[" and "]", a pair of braces "{" and "}" and/or the like. A preferred embodiment of the invention suggests, that said pair of symbols of parenthesis "(" and ")", a pair of brackets "[" and "]", a pair of braises "}" and "{" and/or the like are selected respectively selectable in response to the general position of said pairs of parenthesis, brackets, braises and/or the like. With this the input of symbols into an electronic device by a user is further improved, especially since the user is suggested the respective part of a pair of symbols automatically.

Another advantageous embodiment of the invention is characterized in that the linguistic database of the respective used language is a relational database, comprising a probability calculation for each symbol of the symbol set concerning the distribution of the symbols to the keys.

A further advantageously embodiment of the invention is characterized by displaying inputted symbols on the touch-screen, preferable in a portion of the touch-screen which is disposed at a distance of the keys displayed on the touch-screen, especially preferable in a portion of the touch-screen which is located above the portion, the keys are displayed in.

A further preferred embodiment of the invention is characterized by inputting symbols into said electronic device with kinemimic gestics, preferable direction inducing gestics, preferably realising upper and lower case input and or special character input. With this, the inputting of symbols is further improvable.

Furthermore, the present invention relates to an electronic device, especially a portable consumer device like a terminal for use in a mobile communication network according to GSM, GPRS, UMTS and/or LTE standard, comprising a graphical user interface for inputting symbols into said electronic device according to the present invention, preferably with a method according the present invention. In a preferred embodiment of the present invention said electronic device is a mobile phone having a touch-screen.

Further details, characteristics and advantages of the invention are explained in the following in more detail based on the description of the exemplary embodiments shown in the figures of the drawing. In these figures:
- Fig. 1: shows an electronic device with a graphical user interface for inputting symbols into the device according to the present invention, representing keys of a keyboard associated with an example of a first subset of symbols of a symbol set;
- Fig. 2: shows the electronic device according Fig. 1, representing keys of a keyboard associated with an example of a further subset of symbols of the symbol set;
- Fig. 3: shows the electronic device according Fig. 1 or Fig. 2, representing keys of a keyboard associated with an example of a further subset of symbols of the symbol set;
- Fig. 4: shows the electronic device according Fig. 1 to Fig. 3, representing keys of a keyboard associated with an example of a further subset of symbols of the symbol set;
- Fig. 5: shows an example for the arrangement of keys of the keyboard associated with the first subset of symbols of the symbol set according Fig. 1;
- Fig. 6: shows an example for the arrangement of keys of the keyboard associated with the further subset of symbols of the symbol set according Fig. 2;
- Fig. 7: shows a principle example for a linguistic database comprising a probability calculation for symbols of the symbol set according Fig. 1 concerning the distribution of the symbols to the keys, referred to the German language;
- Fig. 8: shows a principle example for inputting symbols into an electronic device according Fig.1 to 7 with direction inducing gestics;
- Fig. 9: shows another principle example for inputting symbols into an electronic device according Fig.1 to 7 with direction inducing gestics;
- Fig. 10: shows another principle example for inputting symbols into an electronic device according Fig.1 to 7 with direction inducing gestics;
- Fig. 11: shows another principle example for inputting symbols into an electronic device according Fig.1 to 7 with direction inducing gestics;
- Fig. 12: shows another principle example for inputting symbols into an electronic device according Fig.1 to 7 with direction inducing gestics;
- Fig. 13: shows another principle example for inputting symbols into an electronic device according Fig.1 to 7 with direction inducing gestics;
- Fig. 14: shows another principle example for inputting symbols into an electronic device according Fig.1 to 7 with direction inducing gestics;
- Fig. 15: shows another principle example for inputting symbols into an electronic device according Fig.1 to 7 with direction inducing gestics;
- Fig. 16: shows tables with the results of the respective bigram analysis and also the frequency of occurrence of each single letter "A" to "Z" for a linguistic standard work according the German language; and
- Fig. 17: shows tables for the usage with or as the linguistic database with the results according the bigram analysis of Fig. 16 to determine the letters of the keys according the present invention.

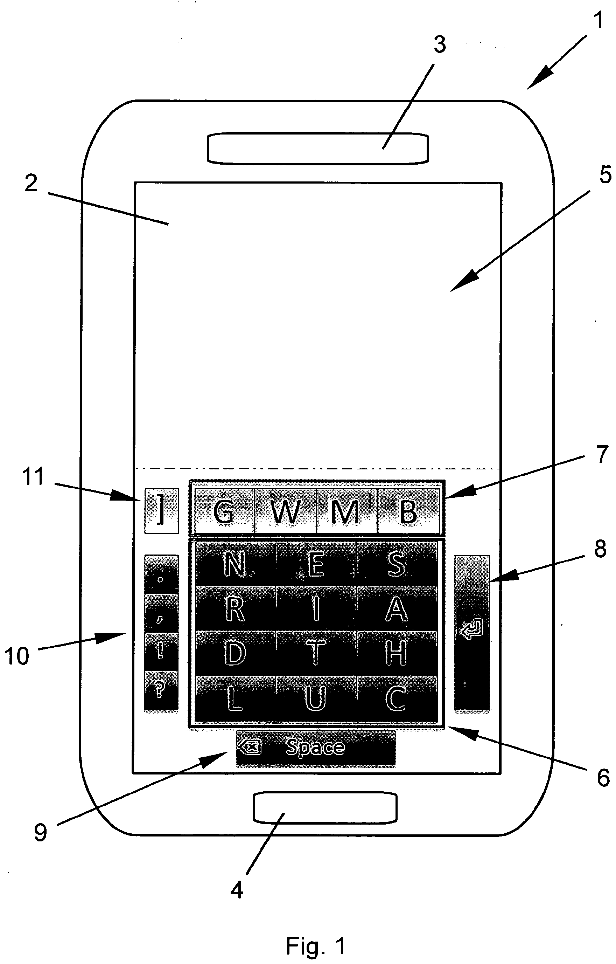

Fig. 1, Fig. 2, Fig. 3 and Fig. 4 show an electronic device 1 having a touch-screen 2 for inputting symbols into the electronic device 1. In the present embodiment the electronic device 1 is a mobile phone for use in a mobile communication network according to GSM, GPRS, UMTS and/or LTE standard. The mobile phone 1 uses the touch-screen 2 for displaying symbols, signs and/or the like and also for inputting symbols into the device. The mobile phone further comprises a loud speaker 3 for acoustical playback of information and a microphone 4 for acoustical input of information and/or control. For displaying information on the touch-screen 2 and for detecting inputs with the touch-screen 2 the mobile phone 1 comprises a graphical user interface according to the present invention.

The graphical user interface of the mobile phone 1 comprises display means for representing a plurality of selectable keys of a keyboard on the touch-screen 2, which plurality of keys is associated with at least one subset of symbols of a symbol set. Furthermore a graphical user interface of the mobile phone 1 comprises mapping means for selecting a symbol in response to user input using one of said plurality of keys associated with at least one subset of symbols of a symbol set. In the present embodiment the graphical user interface of the mobile phone 1 displays inputted symbols in a portion or area 5 of the touch-screen 2, which is located above a portion or area the selectable keys of a keyboard are displayed in (in Fig. 1 to Fig. 4 these portions or areas are symbolic separated by a dashed line).

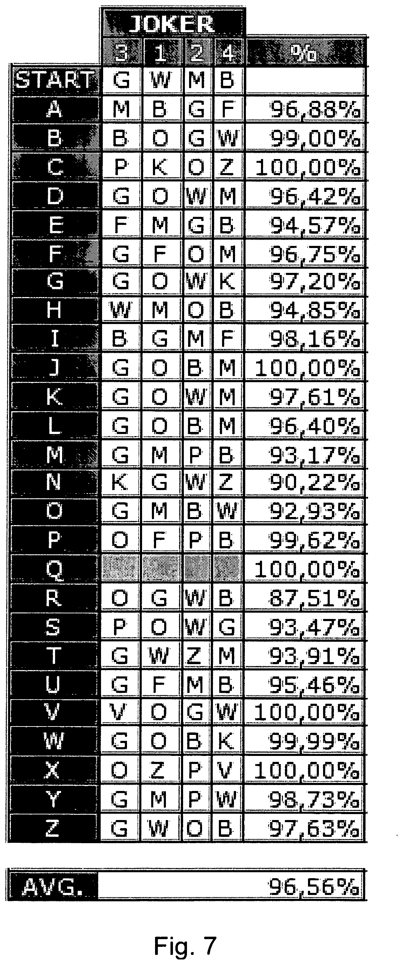

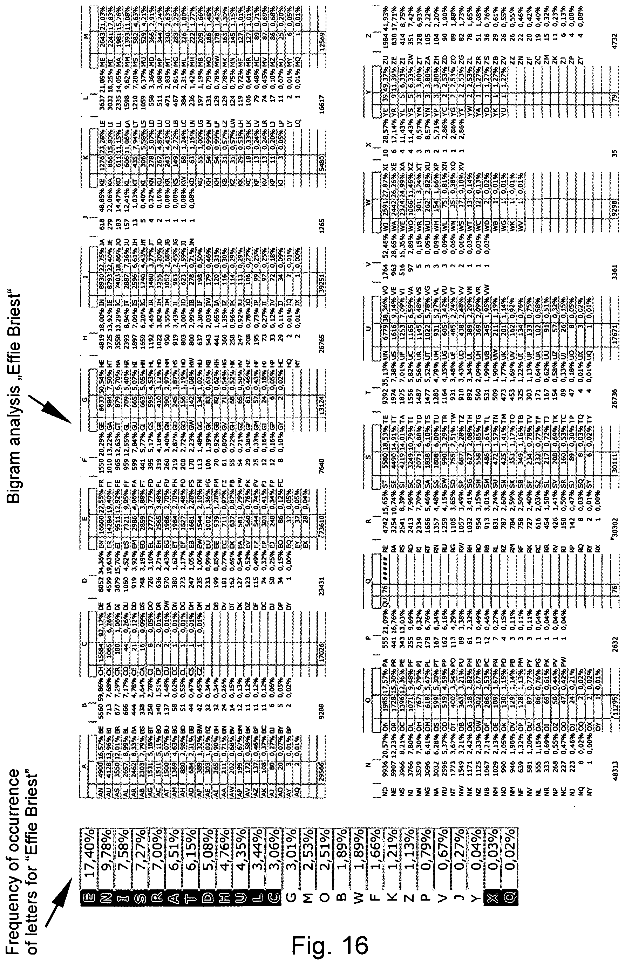

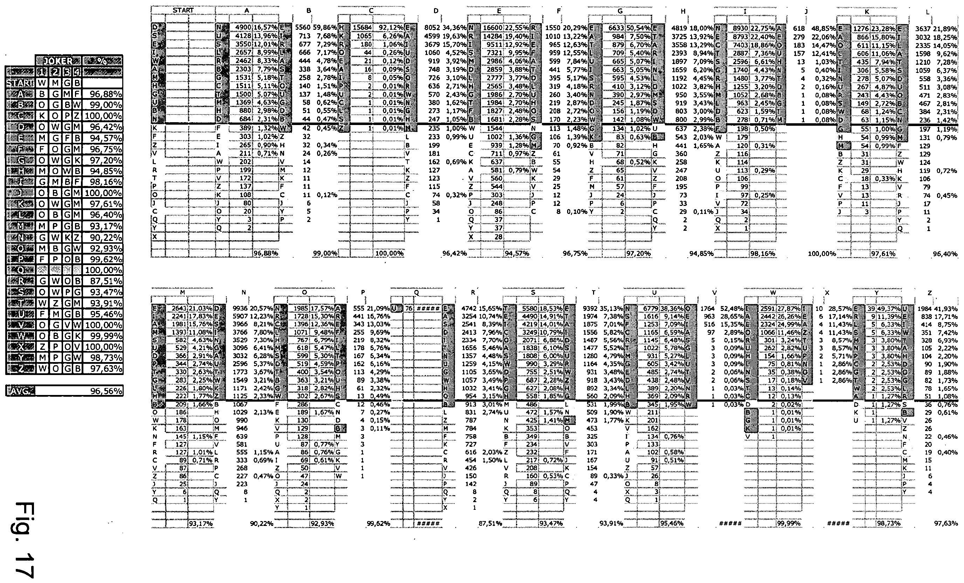

Fig. 1 shows an example of keys of a keyboard associated with a first subset of symbols of a symbol set. Said first subset of symbols of a symbol set gives direct access to twelve letters 6, which are the most commonly used letters of the symbol set according to the respective used language, in the present case the German language, and to four letters 7 which are changed dynamic depending on the last inputted symbol. Presently the keys 7 associated with dynamically changeable letters are located in a portion or area above the keys 6 associated with the twelve commonly used letters. In the present case the dynamically changeable letters of the keys 7 amend the twelve commonly used letters of the keys 6. Thus the example of keys of a keyboard associated with a first subset of symbols of a symbol set shown in Fig. 1 comprise 1 sixteen letters. The dynamic change of the letters of the keys 7 is done automatically by determining the next probably intended letter to be inputted according to a linguistic database of the respective used language. Fig. 7 shows an example of such linguistic database according to the German language. The linguistic database is preferably determined with a so called bigram analysis according to the respective used language. Thereby a text, which is concerning the use of characters representative for the language, is analyzed with respect to a sequence of two consecutive characters, whereby for each pair of letters the frequency of occurrence is determined. In the present case such a linguistic database according to the German language is created by analyzing a standard work, presently "Effie Briest", a novel by Theodor Fontane, with respect to a sequence of two consecutive characters for each letter "A" to "Z". Thus for each letter "A" to "Z" the frequency of occurrence of each combination with another letter "A" to "Z" is determined. Based on the frequency of occurrence of each combination of two letters the the dynamically changeable letters of the keys 7 are determined automatically from the linguistic database. The tables in Fig. 16 show the results of the respective bigram analysis and also the frequency of occurrence of each single letter "A" to "Z" for "Effie Briest". The Tables in Fig. 17 show the usage of the linguistic database with the results according the bigram analysis of Fig. 16.

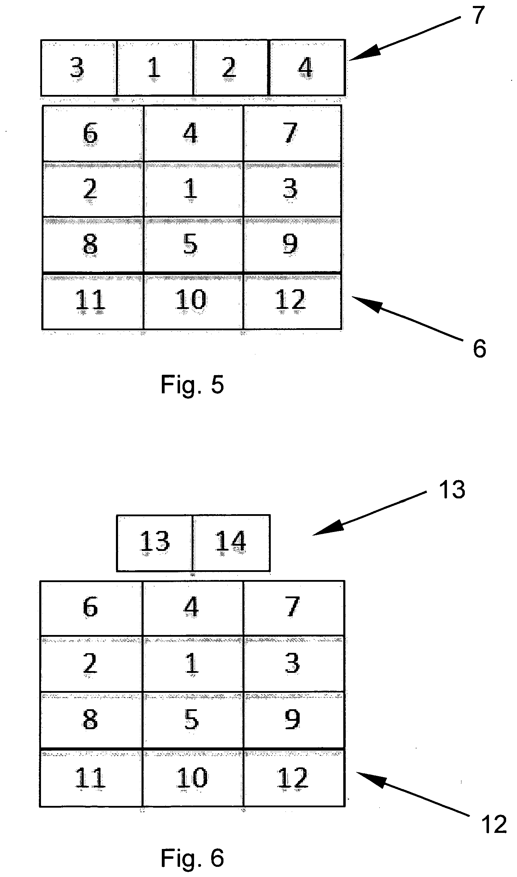

Fig. 5 shows an example for the arrangement of the keys 6 and an example for the arrangement of the keys 7 according to a probability calculation for the respective letters. Numbers shown in Fig. 5 represent the probability, whereby raising numbers advantageously represent a descending probability.

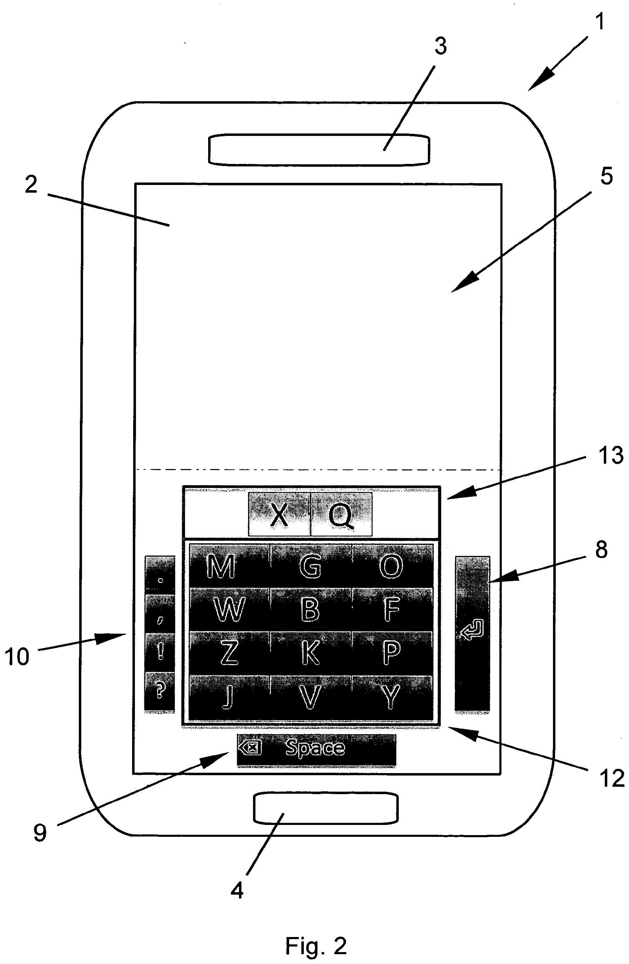

In the present case said first subset furthermore comprises keys 8, 9 and 10, which are associated with overall commonly usable symbols, in the present case for a wordwrap 8, a blank or space character 9 and for punctuation marks 10. These overall commonly usable symbols of a symbol set 8, 9 and 10 are in the present case also part of further subsets of symbols of a symbol set, as shown in Fig. 2, Fig. 3 and Fig. 4. Presently the keys 8, 9, 10 associated with an overall commonly usable symbol of a symbol set are arranged in form of a "U" around the keys 6.

The keys of a keyboard associated with a first subset of symbols of a symbol set according Fig. 1 in addition comprise a key 11, which is associated with a dynamically changeable special character of a symbol set. The key 11 is thereby arranged above the keys 10 next to the keys 7.

Fig. 2 shows an example of keys of a keyboard associated with a further subset of symbols of a symbol set. Said further subset of symbols of a symbol set gives direct access to fourteen letters 12, which are the residual letters compared with the twelve most commonly used letters of the keys 6 of the first subset, and to two letters 13 which preferably are changed dynamic depending on the last inputted symbol. Presently the keys 13 associated with preferably dynamically changeable letters are located in a portion or area above the keys 12 associated with the fourteen residual letters. The dynamic change of the letters of the keys 13 is done automatically by determining the next probably intended letter to be inputted according to a linguistic database of the respective used language. Fig. 6 shows an example for the arrangement of the keys 12 and 13 of the further subset of symbols of a symbol set according to a probability calculation for the respective letters. Numbers shown in Fig. 6 represent the probability, whereby raising numbers advantageously represent a descending probability.

In another embodiment of the present invention, the keys 13 of the further subset of symbols of a symbol set according Fig. 2 are not changed dynamically. Thus the keys 12 and 13 of the further subset of symbols of a symbol set according Fig. 2 comprise the fourteen residual letters related to the twelve most commonly used letters of the keys 6 of the first subset according Fig. 1.

In the present case said further subset furthermore comprises keys 8, 9 and 10, which are associated with overall commonly usable symbols, in the present case for a word-wrap 8, a blank or space character 9 and for punctuation marks 10. These overall commonly usable symbols of a symbol set 8, 9 and 10 are in the present case also part of further subsets of symbols of a symbol set, as shown in Fig. 1, Fig. 3 and Fig. 4. Presently the keys 8, 9, 10 associated with an overall commonly usable symbol of a symbol set are arranged in form of a "U" around the keys 6.

In the present case the dynamically changeable letters of the keys 7 amending the twelve commonly used letters of the keys 6 comprise the letters of the further subset of symbols of a symbol set according Fig. 2, which are in combination with the letters 6 of the first subset are the next probably intended or most verisimilar letter to be inputted according to the respective used language.

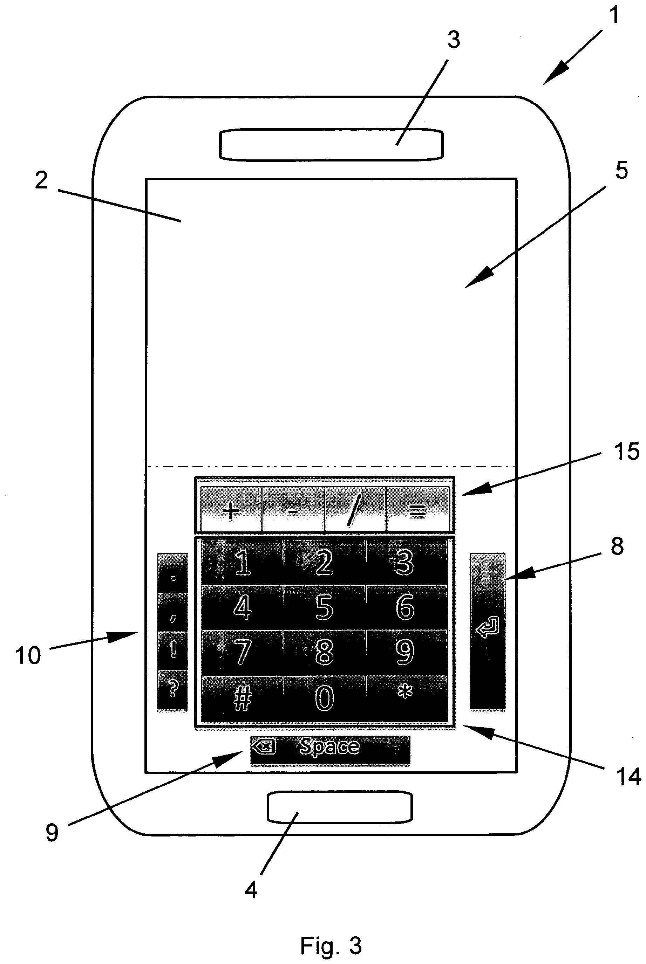

Fig. 3 shows an example of keys of a keyboard associated with a further subset of symbols of a symbol set. Said further subset of symbols of a symbol set gives direct access to keys 14 of a keyboard associated with a subset of numbers and special characters of a symbol set, and to four keys 15 of a keyboard associated with dynamically changeable arithmetic operators of a symbol set. Presently the keys 15 associated with dynamically changeable arithmetic operators are located in a portion or area above the keys 14 associated with a subset of numbers and special characters of a symbol set. The dynamic change of the arithmetic operators of the keys 15 is done automatically by determining the next probably intended arithmetic operators to be inputted.

In the present case said further subset furthermore comprises keys 8, 9 and 10, which are associated with overall commonly usable symbols, in the present case for a word-wrap 8, a blank or space character 9 and for punctuation marks 10. These overall commonly usable symbols of a symbol set 8, 9 and 10 are in the present case also part of further subsets of symbols of a symbol set, as shown in Fig. 1, Fig. 2 and Fig. 4. Presently the keys 8, 9, 10 associated with an overall commonly usable symbol of a symbol set are arranged in form of a "U" around the keys 6.

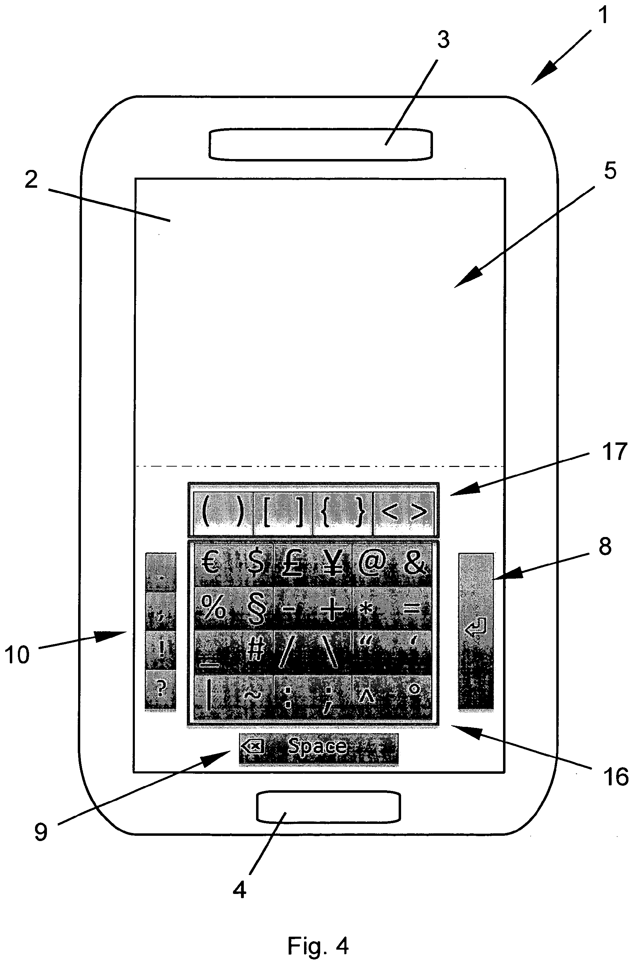

Fig. 4 shows an example of keys of a keyboard associated with a further subset of symbols of a symbol set. Said further subset of symbols of a symbol set gives direct access to keys 16 of a keyboard associated with a subset of pairs of special characters of a symbol set, in the present case especially comprising currency symbols, and to four keys 17 of a keyboard associated with dynamically changeable pairs of special characters of a symbol set, in the present case comprising a pair of parenthesis "(" and ")", a pair of brackets "[" and "]", a pair of braces "{" and "}". Presently the keys 17 are located in a portion or area above the keys 16. The dynamic change of the arithmetic operators of the keys 17 is done automatically by determining the next probably intended or necessary special character of a pair of such special characters to be inputted.

In the present case said further subset furthermore comprises keys 8, 9 and 10, which are associated with overall commonly usable symbols, in the present case for a word-wrap 8, a blank or space character 9 and for punctuation marks 10. These overall commonly usable symbols of a symbol set 8, 9 and 10 are in the present case also part of further subsets of symbols of a symbol set, as shown in Fig. 1, Fig. 2 and Fig. 3. Presently the keys 8, 9, 10 associated with an overall commonly usable symbol of a symbol set are arranged in form of a "U" around the keys 6.

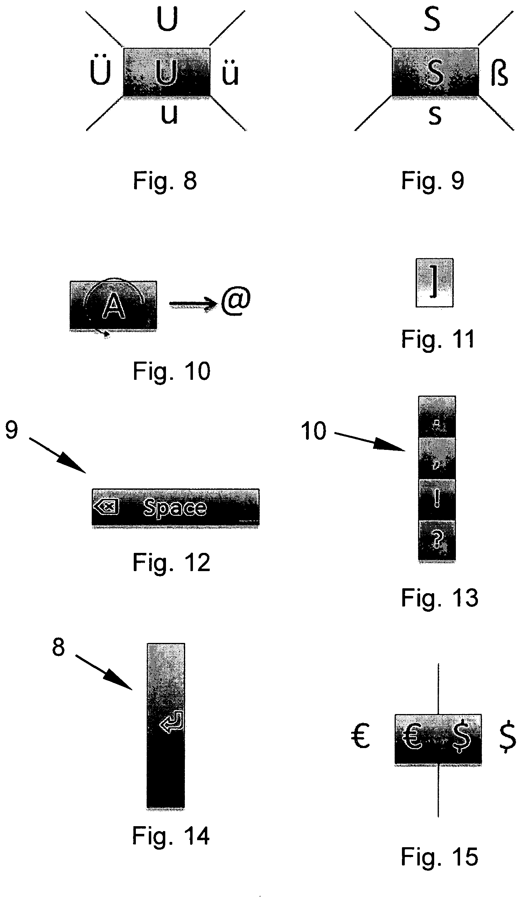

The graphical user interface of the mobile phone 1 advantageously allows an input of symbols into the mobile phone 1 with kinemimic gestics, presently direction inducing gestics. The function of such direction inducing gestics are explained in the following on the exemplary embodiments shown in Fig. 8, Fig. 9, Fig. 10, Fig. 11, Fig. 12, Fig. 13, Fig. 14 and Fig. 15.

Fig. 8 shows a selectable key of a keyboard which is associated with the letter "U" of a subset of symbols of a symbol set. Selecting the key "U" by pressing the key presently realises a lower case input, thus the lower case letter "u". An upward movement or shifting of the key "U" realised an input of an upper case letter, thus "U". A down word movement or shifting of the key "U" realises an input of a lower case letter, thus "u". A movement or shifting of the key "U" to the left realises presently the input of a related umlaut as capital letter, thus "ü", if existent for the letter of the respective key. A movement or shifting to the right of the key realises an input of the related small capital letter, thus "ü", if existent for the respective letter of the key.

Fig. 9 shows a selectable key of a keyboard which is associated with the letter "S" of a subset of symbols of a symbol set. Selecting the key "S" by pressing the key presently realises a lower case input, thus the lower case letter "s". An upward movement or shifting of the key "S" realised an input of an upper case letter, thus "S". A down word movement or shifting of the key "S" realises an input of a lower case letter, thus "s". A movement or shifting of the key "S" to the right realises presently the input of a related special letter, thus "β" according the German language, if existent for the letter of the respective key.

A movement or shifting of a key describing kind of circle realises an input of an additional option. Fig. 10 shows this for the letter "A". Describing a circle by pressing the key "A" realises presently an input of the special character "@".

Referring to the key 11 associated with a dynamically changeable special character of a symbol set (compare Fig. 1) an input with a direction inducing gestic realises the following inputs. Pressing of the key realises an input of the represented special character, in the present case "]". The allocation or assignment of the key is created dynamically and displays the respectively closing sign, in this case the right parenthesis "]". If for example a user opens a bracket "[" by using the keyboard layout according to Fig. 4, the keyboard layout automatically switches presently back to the keyboard layout according to Fig. 1 and the key 11 with a dynamically changeable special character displays the respective special character of the pair of special characters according to Fig. 4. This function is presently supported for the special character pairs "()", "[]", "{}", "<>" and "_{"}"".

Fig. 12 shows the key 9, associated with the blank or space character. Pressing of the key 9 realises input of the blank or space character. Movement or shifting of the key 9 to the left realises a delete of the last inputted symbol. A hold of the left portion of the key 9 deletes the respectively last inputted symbol until the key 9 is let loose. If the keyboard layout according to Fig. 1 is presently activated a movement or shifting of the key 9 from the bottom the touch-screen to the middle of the touch-screen realises an automatically switching to the keyboard layout according to Fig. 2. In all the other keyboard layouts according to Fig. 2, Fig. 3 and Fig. 4 a movement or shifting of the key 9 from the bottom of the touch-screen 2 to the middle of the touch-screen 2 realises an automatically switching to the keyboard layout according to Fig. 1.

Fig. 13 shows the keys 10, associated with overall commonly usable punctuation marks of a symbol set. Pressing one of the keys 10 realises input of the respective punctuation mark. Movement or shifting of the keys 10 to the right realises a displaying of the special character subset according to Fig. 4. If the keyboard layout according to Fig. 4 is presently activated a movement or shifting of the keys 10 to the right realises an automatically switching to the keyboard layout according to Fig. 1.

Fig. 14 shows the key 8, associated with the overall commonly usable word-wrap. Pressing of the key 8 realises input of a word-wrap. Movement or shifting of the key 8 to the left realises an automatically switching to the keyboard layout according to Fig. 3. If the keyboard layout according to Fig. 3 is presently activated a movement or shifting of the key 8 to the left realises an automatically switching to the keyboard layout according to Fig. 1.

Fig. 15 shows a selectable key of a keyboard which is associated with a subset of pairs of special characters of a symbol set, in the present case especially comprising currency symbols "€ $". Presently selecting the key "€ $" by pressing the key presently realises no input. A movement or shifting of the key "€ $" to the left realises presently the input of the left currency symbol, thus "€". A movement or shifting to the right of the key realises an input of the right currency symbol, thus "$".

The exemplary embodiments of the invention shown in the figures of the drawing and explained in connection with the description merely serve to explain the invention and are in no way restrictive.

### List of reference numerals:

- 1: electronic device/mobile phone
- 2: touch-screen (electronic device/mobile phone (1))
- 3: loudspeaker (electronic device/mobile phone (1))
- 4: microphone (electronic device/mobile phone (1))
- 5: portion/area for displaying inputted symbols (touch-screen (2))
- 6: keys of a keyboard associated with a first subset of letters of a symbol set
- 7: keys of a keyboard associated with dynamically changeable letters of the first subset of letters of a symbol set
- 8: key of a keyboard associated with an overall commonly usable symbol of a symbol set (wordwrap)
- 9: key of a keyboard associated with an overall commonly usable symbol of a symbol set (blank/space character)
- 10: keys of a keyboard associated with overall commonly usable punctuation marks of a symbol set
- 11: key of a keyboard associated with a dynamically changeable special character of a symbol set
- 12: keys of a keyboard associated with a second subset of letters of a symbol set
- 13: keys of a keyboard associated with dynamically changeable letters of the second subset of letters of a symbol set
- 14: keys of a keyboard associated with a subset of numbers and special characters of a symbol set
- 15: keys of a keyboard associated with dynamically changeable arithmetic operators of a symbol set
- 16: keys of a keyboard associated with a subset of pairs of special characters of a symbol set
- 17: keys of a keyboard associated with dynamically changeable pairs of special characters of a symbol set

## Claims

1. A graphical user interface for inputting symbols into an electronic device having a touch-screen,
comprising
display means for representing a plurality of selectable keys of a keyboard on the touch-screen, said plurality of keys associated with at least one subset of symbols of a symbol set,
and
mapping means for selecting a symbol in response to a user input using one of said plurality of keys associated with at least one subset of symbols of a symbol set,
**characterized in that**
said plurality of keys is associated
with a first subset of symbols of a symbol set comprising the most commonly used symbols of the symbol set according the respective used language
and
with at least one further subset of symbols of the symbol set comprising the residual symbols of the symbol set,
whereby
the plurality of keys of one of the associated subsets of symbols of the symbol set is displayed on the touch-screen, and
said plurality of keys of one of the associated subsets of symbols of the symbol set displayed on the touch-screen comprises at least two keys associated with symbols which are changed dynamically depending on the last inputted symbol by using means for automatically determining the next probably intended symbol to be inputted according to a linguistic database of the respective used language.

2. A graphical user interface according to claim 1, **characterized in that** said at least two keys associated with dynamically changeable symbols of the subset of
symbols of the symbol set are displayed on the touch-screen in a portion of the touch-screen and/or in a manner, which differs from the portion of the touch-screen and/or the manner the other keys associated with symbols of the subset of symbols of the symbol set are displayed on the touch-screen.

3. A graphical user interface according to claim 1 or claim 2, **characterized by** means for an automatic change between the plurality of keys associated with said first subset of symbols of a symbol set comprising the most commonly used symbols of the symbol set according to the respective used language and
said at least one further subset of symbols of the symbol set comprising the residual symbols of the symbol set, preferable depending on the last inputted symbols, especially preferable by using means for automatically determining the next probably intended symbol to be inputted according to a linguistic database of the respective used language.

4. A graphical user interface according to one or more of the claims 1 to 3, **characterized in that** the subset of symbols of a symbol set comprises alphabetic characters corresponding to an array of letters "A" to "Z", numeric characters corresponding to an array of numbers "0" to "9", punctuation symbols and/or special characters, such as a pair of parenthesis "(" and ")", a pair of brackets "[" and "]", a pair of braces "{" and "}" and/or the like.

5. A graphical user interface according to one or more of the claims 1 to 4, **characterized in that** each key of said plurality of keys is associated with one symbol of the subset of symbols of the symbol set or a pair of symbols of the subset of symbols of the symbol set, whereby said pair of symbols are special characters, such as a pair of parenthesis "(" and ")", a pair of brackets "[" and "]", a pair of braces "{" and "}" and/or the like.

6. A graphical user interface according to one or more of the claims 1 to 5, **characterized by** display means for displaying inputted symbols on the touch-screen, preferable in a portion of the touch-screen which is disposed at a distance of the keys displayed on the touch-screen, especially preferable in a portion of the touch-screen which is located above the portion, the keys are displayed in.

7. A graphical user interface according to one or more of the claims 1 to 6, **characterized by** means for inputting symbols into said electronic device with kinemimic gestics, preferable direction inducing gestics, preferably realising upper and lower case input and or special character input.

8. A method for inputting symbols into an electronic device having a touch-screen,
comprising:
representing a plurality of selectable keys of a keyboard on the touch-screen, said plurality of keys associated with at least one subset of symbols of a symbol set,
and
mapping for selecting a symbol in response to a user input using one of said plurality of keys associated with at least one subset of symbols of a symbol set,
**characterized by**
associating said plurality of keys
with a first subset of symbols of a symbol set comprising the most commonly used symbols of the symbol set according the respective used language
and
with at least one further subset of symbols of the symbol set comprising the residual symbols of the symbol set,
thereby
displaying the plurality of keys of one of the associated subsets of symbols of the symbol set on the touch-screen,
and
displaying said plurality of keys of one of the associated subsets of symbols of the symbol set on the touch-screen,
comprising at least two keys associated with symbols which are changed dynamically depending on the last inputted symbol by using means for automatically determining the next probably intended symbol to be inputted according to a linguistic database of the respective used language.

9. A method according to claim 8, **characterized by** displaying said at least two keys associated with dynamically changeable symbols of the subset of symbols of the symbol set on the touch-screen in a portion of the touch-screen and/or in a manner, which differs from the portion of the touch-screen and/or the manner the other keys associated with symbols of the subset of symbols of the symbol set are displayed on the touch-screen.

10. A method according to claim 8 or claim 9, **characterized by** an automatic change between the plurality of keys associated with said first subset of symbols of a symbol set comprising the most commonly used symbols of the symbol set according to the respective used language and said at least one further subset of symbols of the symbol set comprising the residual symbols of the symbol set, preferably depending on the last inputted symbols, especially preferable by using means for automatically determining the next probably intended symbol to be inputted according to a linguistic database of the respective used language.

11. A method according to one or more of the claims 8 to 10, **characterized in that** the subset of symbols of a symbol set comprises alphabetic characters corresponding to an array of letters "A" to "Z", numeric characters corresponding to an array of numbers "0" to "9", punctuation symbols and/or special characters, such as a pair of parenthesis "(" and ")", a pair of brackets "[" and "]", a pair of braces "{" and "}" and/or the like.

12. A method according to one or more of the claims 8 to 11, **characterized by** associating each key of said plurality of keys with one symbol of the subset of symbols of the symbol set or a pair of symbols of the subset of symbols of the symbol set, whereby said pair of symbols are special characters, such as a pair of parenthesis "(" and ")", a pair of brackets "[" and "]", a pair of braces "{" and "}" and/or the like.

13. A method according to one or more of the claims 8 to 12, **characterized by** displaying inputted symbols on the touch-screen, preferable in a portion of the touch-screen which is disposed at a distance of the keys displayed on the touch-screen, especially preferable in a portion of the touch-screen which is located above the portion, the keys are displayed in.

14. A method according to one or more of the claims 8 to 13, **characterized by** inputting symbols into said electronic device with kinemimic gestics, preferable direction inducing gestics, preferably realising upper and lower case input and or special character input.

15. An electronic device, comprising a graphical user interface for inputting symbols into said electronic device according to one or more of the claims 1 to 7 with a method according to one or more of the claims 8 to 14.

## Patentansprüche

1. Graphische Benutzerschnittstelle zum Eingeben von Zeichen in eine elektronische Vorrichtung mit einem Berührungsbildschirm,
umfassend
eine Anzeigevorrichtung zur Darstellung einer Vielzahl auswählbarer Tasten einer Tastatur auf dem Berührungsbildschirm, wobei die Vielzahl von Tasten zumindest einer Teilgruppe von Zeichen eines Zeichensatzes zugeordnet ist, und
eine Abbildungsvorrichtung zum Auswählen eines Zeichens in Reaktion auf eine Benutzereingabe unter Verwendung einer der Vielzahl von Tasten, die zumindest einer Teilgruppe von Zeichen eines Zeichensatzes zugeordnet ist, **dadurch gekennzeichnet, dass**
die Vielzahl an Tasten einer ersten Teilgruppe von Zeichen eines Zeichensatzes zugeordnet ist, welche die am häufigsten verwendeten Zeichen des Zeichensatzes gemäß der jeweiligen verwendeten Sprache aufweist,
und
zumindest einer weiteren Teilgruppe von Zeichen des Zeichensatzes, welche die restlichen Zeichen des Zeichensatzes aufweist,
wobei
die Vielzahl an Tasten der einen der zugeordneten Teilgruppen von Zeichen des Zeichensatzes auf dem Berührungsbildschirm angezeigt wird,
und
die Vielzahl an Tasten der einen der zugeordneten Teilgruppen von Zeichen des Zeichensatzes, welche auf dem Berührungsbildschirm angezeigt wird, zumindest zwei Tasten aufweist, die Zeichen zugeordnet sind, welche abhängig von dem zuletzt eingegebenen Zeichen dynamisch wechseln unter Verwendung von Mitteln zur automatischen Bestimmung des nächsten wahrscheinlich zur Eingabe bestimmten Zeichens gemäß einer linguistischen Datenbank der jeweiligen verwendeten Sprache.

2. Graphische Benutzerschnittstelle gemäß Anspruch 1, **dadurch gekennzeichnet, dass** die zumindest zwei Tasten, die dynamisch wechselbaren Zeichen der Teilgruppe von Zeichen des Zeichensatzes zugeordnet sind, auf dem Berührungsbildschirm in einem Bereich des Berührungsbildschirms und/oder in einer Art und Weise angezeigt werden, der/die sich von dem Bereich des Berührungsbildschirms und/oder der Art und Weise unterscheidet, in welchem/welcher die anderen Tasten, die Zeichen der Teilgruppe von Zeichen des Zeichensatzes zugeordnet sind, auf dem Berührungsbildschirm angezeigt werden.

3. Graphische Benutzerschnittstelle gemäß Anspruch 1 oder Anspruch 2, **gekennzeichnet durch** Mittel zum automatischen Wechseln zwischen der Vielzahl von Tasten, die der ersten Teilgruppe von Zeichen eines Zeichensatzes zugeordnet sind, welche die am häufigsten gebrauchten Zeichen des Zeichensatzes gemäß der jeweiligen verwendeten Sprache aufweist, und der zumindest einen weiteren Teilgruppe von Zeichen des Zeichensatzes, welche die restlichen Zeichen des Zeichensatzes aufweist, vorzugsweise in Abhängigkeit von den zuletzt eingegeben Zeichen, besonders bevorzugt unter Verwendung von Mitteln zur automatischen Bestimmung des nächsten wahrscheinlich zur Eingabe bestimmten Zeichens gemäß einer linguistischen Datenbank der jeweiligen verwendeten Sprache.

4. Graphische Benutzerschnittstelle gemäß einem oder mehreren der Ansprüche 1 bis 3, **dadurch gekennzeichnet, dass** die Teilgruppe von Zeichen eines Zeichensatzes alphabetische Zeichen entsprechend einer Reihe von Buchstaben "A" bis "Z", numerische Zeichen entsprechend einer Reihe von Zahlen "0" bis "9", Punktionssymbole und/oder spezielle Zeichen, wie einen Klammerausdruck "("und")", ein Paar aus eckigen Klammern "["und"]", ein Paar aus geschweiften Klammern "{"und"}" und/oder dergleichen aufweist.

5. Graphische Benutzerschnittstelle gemäß einem oder mehreren der Ansprüche 1 bis 4, **dadurch gekennzeichnet, dass** jede Taste der Vielzahl von Tasten einem Zeichen der Teilgruppe von Zeichen des Zeichensatzes oder einem Paar von Zeichen der Teilgruppe von Zeichen des Zeichensatzes zugeordnet ist, wobei das Zeichenpaar aus speziellen Zeichen besteht, wie einem Klammerausdruck "("und")", einem Paar aus eckigen Klammern "["und"]", einem Paar aus geschweiften Klammern "{"und"}" und/oder dergleichen.

6. Graphische Benutzerschnittstelle gemäß einem oder mehreren der Ansprüche 1 bis 5, **gekennzeichnet durch** Anzeigevorrichtungen zum Anzeigen eingegebener Zeichen auf dem Berührungsbildschirm, vorzugsweise in einem Bereich des Berührungsbildschirms, welcher mit Abstand von den auf dem Berührungsbildschirm angezeigten Tasten angeordnet ist, besonders bevorzugt in einem Bereich des Berührungsbildschirms, welcher oberhalb des Bereiches angeordnet ist, in welchem die Tasten angezeigt sind.

7. Graphische Benutzerschnittstelle gemäß einem oder mehreren der Ansprüche 1 bis 6, **gekennzeichnet durch** Vorrichtungen zum Eingeben von Zeichen in die elektronische Vorrichtung mit kinemimischer Gestik, vorzugsweise Richtung aufweisender Gestik, vorzugsweise unter Realisierung von Groß- und Kleinschreibung und/oder spezieller Zeicheneingabe.

8. Verfahren zur Eingabe von Symbolen in eine elektronische Vorrichtung mit einem Berührungsbildschirm
umfassend
die Darstellung einer Vielzahl auswählbarer Tasten einer Tastatur auf dem Berührungsbildschirm, wobei die Vielzahl von Tasten zumindest einer Teilgruppe von Zeichen eines Zeichensatzes zugeordnet ist,
und
die Abbildung zum Auswählen eines Zeichens in Reaktion auf eine Benutzereingabe unter Verwendung einer der Vielzahl von Tasten, die zumindest einer Teilgruppe von Zeichen eines Zeichensatzes zugeordnet ist, **gekennzeichnet durch**
die Zuordnung der Vielzahl an Tasten zu einer ersten Teilgruppe von Zeichen eines Zeichensatzes, welche die am häufigsten verwendeten Zeichen des Zeichensatzes gemäß der jeweiligen verwendeten Sprache aufweist,
und
zumindest zu einer weiteren Teilgruppe von Zeichen des Zeichensatzes, welche die restlichen Zeichen des Zeichensatzes aufweist,
wodurch
die Vielzahl an Tasten der einen der zugeordneten Teilgruppen von Zeichen des Zeichensatzes auf dem Berührungsbildschirm angezeigt wird,
und
die Vielzahl an Tasten der einen der zugeordneten Teilgruppen von Zeichen des Zeichensatzes, welche auf dem Berührungsbildschirm angezeigt wird, zumindest zwei Tasten aufweist, die Zeichen zugeordnet sind, welche abhängig von dem zuletzt eingegebenen Zeichen dynamisch wechseln unter Verwendung von Mitteln zur automatischen Bestimmung des nächsten wahrscheinlich zur Eingabe bestimmten Zeichens gemäß einer linguistischen Datenbank der jeweiligen verwendeten Sprache.

9. Verfahren gemäß Anspruch 8, **gekennzeichnet durch** das Anzeigen der zumindest zwei Tasten, die dynamisch wechselbaren Zeichen der Teilgruppe von Zeichen des Zeichensatzes zugeordnet sind, auf dem Berührungsbildschirm in einem Bereich des Berührungsbildschirms und/oder in einer Art und Weise, der/die sich von dem Bereich des Berührungsbildschirms und/oder der Art und Weise unterscheidet, in welchem/welcher die anderen Tasten, die Zeichen der Teilgruppe von Zeichen des Zeichensatzes zugeordnet sind, auf dem Berührungsbildschirm angezeigt werden.

10. Verfahren gemäß Anspruch 8 oder Anspruch 9, **gekennzeichnet durch** ein automatisches Wechseln zwischen der Vielzahl von Tasten, die der ersten Teilgruppe von Zeichen eines Zeichensatzes zugeordnet ist, welche die am häufigsten gebrauchten Zeichen des Zeichensatzes gemäß der jeweiligen verwendeten Sprache aufweist, und der zumindest einen weiteren Teilgruppe von Zeichen des Zeichensatzes, welche die restlichen Zeichen des Zeichensatzes aufweist, vorzugsweise in Abhängigkeit von den zuletzt eingegeben Zeichen, besonders bevorzugt unter Verwendung von Mitteln zur automatischen Bestimmung des nächsten wahrscheinlich zur Eingabe bestimmten Zeichens gemäß einer linguistischen Datenbank der jeweiligen verwendeten Sprache.

11. Verfahren gemäß einem oder mehreren der Ansprüche 8 bis 10, **dadurch gekennzeichnet, dass** die Teilgruppe von Zeichen eines Zeichensatzes alphabetische Zeichen entsprechend einer Reihe von Buchstaben "A" bis "Z", numerische Zeichen entsprechend einer Reihe von Zahlen "0" bis "9", Punktionssymbole und/oder spezielle Zeichen, wie einen Klammerausdruck "("und")", ein Paar aus eckigen Klammern "["und"]", ein Paar aus geschweiften Klammern "{"und"}" und/oder dergleichen aufweist.

12. Verfahren gemäß einem oder mehreren der Ansprüche 8 bis 11, **gekennzeichnet durch** die Zuordnung jeder Taste der Vielzahl von Tasten zu einem Zeichen der Teilgruppe von Zeichen des Zeichensatzes oder zu einem Paar von Zeichen der Teilgruppe von Zeichen des Zeichensatzes, wobei das Zeichenpaar aus speziellen Zeichen besteht, wie einem Klammerausdruck "("und")", einem Paar aus eckigen Klammern "["und"]", einem Paar aus geschweiften Klammern "{"und"}" und/oder dergleichen.

13. Verfahren gemäß einem oder mehreren der Ansprüche 8 bis 12, **gekennzeichnet durch** das Anzeigen eingegebener Zeichen auf dem Berührungsbildschirm, vorzugsweise in einem Bereich des Berührungsbildschirms, welcher mit Abstand von den auf dem Berührungsbildschirm angezeigten Tasten angeordnet ist, besonders bevorzugt in einem Bereich des Berührungsbildschirms, welcher oberhalb des Bereiches angeordnet ist, in welchem die Tasten angezeigt sind.

14. Verfahren gemäß einem oder mehreren der Ansprüche 8 bis 13, **gekennzeichnet durch** das Eingeben von Zeichen in die elektronische Vorrichtung mit kinemimischer Gestik, vorzugsweise Richtung aufweisender Gestik, vorzugsweise unter Realisierung von Groß- und Kleinschreibung und/oder spezieller Zeicheneingabe.

15. Elektronische Vorrichtung mit einer graphischen Benutzerschnittstelle zur Eingabe von Zeichen in die elektronische Vorrichtung gemäß einem oder mehreren der Ansprüche 1 bis 7 mit Hilfe eines Verfahren gemäß einem oder mehreren der Ansprüche 8 bis 14.

## Revendications

1. Interface graphique d'utilisateur pour entrer des symboles dans un dispositif électronique comprenant un écran tactile,
comprenant
des moyens d'affichage pour représenter une pluralité de touches sélectionnables d'un clavier sur l'écran tactile, ladite pluralité de touches étant attribuée à au moins un sous-groupe de symboles d'un jeu de symboles,
et
des moyens d'imagerie pour sélectionner un symbole en réponse à une entrée d'utilisateur en utilisant une de ladite pluralité de touches attribuée à au moins un sous-groupe de symboles d'un jeu de symboles,
**caractérisé en ce que**
ladite pluralité de touches est attribuée à un premier sous-groupe de symboles d'un jeu de symboles comprenant les symboles les plus fréquemment utilisés du jeu de symboles selon la langue respective utilisée et
à au moins un autre sous-groupe de symboles du jeu de symboles comprenant les symboles restants du jeu de symboles,
la pluralité de touches d'un des sous-groupes de symboles attribués du jeu de symboles étant affichée sur l'écran tactile,
et ladite pluralité de touches d'un des sous-groupes de symboles du jeu de symboles affichée sur l'écran tactile comprenant au moins deux touches attribuées à des symboles, qui sont changés dynamiquement en fonction du dernier symbole entré en utilisant des moyens pour déterminer automatiquement le symbole suivant probablement prévu pour être entré selon une base de données linguistique de la langue respective utilisée.

2. Interface graphique d'utilisateur selon la revendication 1, **caractérisée en ce qu'**au moins lesdites deux touches attribuées à des symboles changeant dynamiquement du sous-groupe de symboles du jeu de symboles sont affichées sur l'écran tactile dans une partie de l'écran tactile et/ou d'une manière, qui diffère de la partie de l'écran tactile et/ou de la manière dans laquelle les autres touches attribuées à des symboles du sous-groupe de symboles du jeu de symboles sont affiches sur l'écran tactile.

3. Interface graphique d'utilisateur selon la revendication 1 ou la revendication 2, **caractérisée par** des moyens pour un changement automatique entre la pluralité de touches attribuées au premier sous-groupe de symboles d'un jeu de symboles comprenant les symboles les plus fréquemment utilisés du jeu de symboles selon la langue respective utilisée et ledit au moins un autre sous-groupe de symboles du jeu de symboles comprenant les symboles restants du jeu de symboles, de préférence en fonction des derniers symboles entrés, de préférence particulière en utilisant des moyens pour déterminer automatiquement le symbole suivant probablement prévu pour être entré selon une base de données linguistique de la langue respective utilisée.

4. Interface graphique d'utilisateur selon l'une ou plusieurs des revendications 1 à 3, **caractérisée en ce que** le sous-groupe de symboles d'un jeu de symboles comprend des caractères alphabétiques correspondant à une série de lettres « A » à « Z », des caractères numériques correspondant à une série de nombres « 0 » à « 9 », des symboles de ponctuation et/ou des caractères particuliers, tels qu'une paire de parenthèses « (« et ») », une paire de crochets « [« et »] », une paire d'accolades «{« et »}» et/ou similaire.

5. Interface graphique d'utilisateur selon l'une ou plusieurs des revendications 1 à 4, **caractérisée en ce que** chaque touche de ladite pluralité de touches est attribuée à un symbole du sous-groupe de symboles du jeu de symboles ou à une paire de symboles du sous-groupe de symboles du jeu de symboles, ladite paire de symboles étant des caractères particuliers, tels qu'une paire de parenthèses « (« et »)», une paire de crochets « [« et »]», une paire d'accolades «{« et »}» et/ou similaire.

6. Interface graphique d'utilisateur selon l'une ou plusieurs des revendications 1 à 5, **caractérisée par** des moyens d'affichage pour afficher des symboles entrés sur l'écran tactile, de préférence dans une partie de l'écran tactile, qui est disposée à une distance des touches affichées sur l'écran tactile, de préférence particulière dans une partie de l'écran tactile, qui se trouve au-dessus de la partie, dans laquelle sont affichées les touches.

7. Interface graphique d'utilisateur selon l'une ou plusieurs des revendications 1 à 6, **caractérisée par** des moyens pour entrer des symboles dans ledit dispositif électronique avec des gestes kinémimiques, de préférence des gestes comprenant une direction, de préférence en réalisant des entrées respectant les majuscules et les minuscules et/ou des entrées de caractères particuliers.

8. Procédé pour entrer des symboles dans un dispositif électronique
comprenant un écran tactile,
comprenant les étapes de
représenter une pluralité de touches sélectionnables d'un clavier sur l'écran tactile, ladite pluralité de touches étant attribuée à au moins un sous-groupe de symboles d'un jeu de symboles,
et
réaliser une imagerie pour sélectionner un symbole en réponse à une entrée d'utilisateur en utilisant une de ladite pluralité de touches attribuée à au moins un sous-groupe de symboles d'un jeu de symboles,
**caractérisé par** l'étape d'
attribuer ladite pluralité de touches à un premier sous-groupe de symboles d'un jeu de symboles comprenant les symboles les plus fréquemment utilisés du jeu de symboles selon la langue respective utilisée
et
à au moins un autre sous-groupe de symboles du jeu de symboles comprenant les symboles restants du jeu de symboles,
pour ainsi afficher la pluralité de touches d'un des sous-groupes de symboles attribués du jeu de symboles sur l'écran tactile,
et afficher ladite pluralité de touches d'un des sous-groupes de symboles du jeu de symboles sur l'écran tactile, comprenant au moins deux touches attribuées à des symboles, qui sont changés dynamiquement en fonction du dernier symbole entré en utilisant des moyens pour déterminer automatiquement le symbole suivant probablement prévu pour être entré selon une base de données linguistique de la langue respective utilisée.

9. Procédé selon la revendication 8, **caractérisé par** l'affichage desdites au moins deux touches attribuées à des symboles changeant dynamiquement du sous-groupe de symboles du jeu de symboles sur l'écran tactile dans une partie de l'écran tactile et/ou d'une manière, qui diffère de la partie de l'écran tactile et/ou de la manière dans laquelle les autres touches attribuées à des symboles du sous-groupe de symboles du jeu de symboles sont affiches sur l'écran tactile.

10. Procédé selon la revendication 8 ou la revendication 9, **caractérisé par** un changement automatique entre la pluralité de touches attribuées audit premier sous-groupe de symboles d'un jeu de symboles comprenant les symboles les plus fréquemment utilisés du jeu de symboles selon la langue respective utilisée et ledit au moins un autre sous-groupe de symboles du jeu de symboles comprenant les symboles restants du jeu de symboles, de préférence en fonction des derniers symboles entrés, de préférence particulière en utilisant des moyens pour déterminer automatiquement le symbole suivant probablement prévu pour être entré selon une base de données linguistique de la langue respective utilisée.

11. Procédé selon l'une ou plusieurs des revendications 8 à 10, **caractérisé en ce que** le sous-groupe de symboles d'un jeu de symboles comprend des caractères alphabétiques correspondant à une série de lettres « A » à « Z », des caractères numériques correspondant à une série de nombres « 0 » à « 9 », des symboles de ponctuation et/ou des caractères particuliers, tels qu'une paire de parenthèses « (« et ») », une paire de crochets « [« et »] », une paire d'accolades « {« et »}» et/ou similaire.

12. Procédé selon l'une ou plusieurs des revendications 8 à 11, **caractérisé par** l'attribution de chaque touche de ladite pluralité de touches à un symbole du sous-groupe de symboles du jeu de symboles ou à une paire de symboles du sous-groupe de symboles du jeu de symboles, ladite paire de symboles étant des caractères particuliers, tels qu'une paire de parenthèses « (« et ») », une paire de crochets « [« et »] », une paire d'accolades «{« et »}» et/ou similaire.

13. Procédé selon l'une ou plusieurs des revendications 8 à 12, **caractérisé par** l'affichage des symboles entrés sur l'écran tactile, de préférence dans une partie de l'écran tactile, qui est disposée à une distance des touches affichées sur l'écran tactile, de préférence particulière dans une partie de l'écran tactile, qui se trouve au-dessus de la partie, dans laquelle sont affichées les touches.

14. Procédé selon l'une ou plusieurs des revendications 8 à 13, **caractérisé par** l'entrée des symboles dans ledit dispositif électronique avec des gestes kinémimiques, de préférence des gestes comprenant une direction, de préférence en réalisant des entrées respectant les majuscules et les minuscules et/ou des entrées de caractères particuliers.

15. Dispositif électronique comprenant une interface graphique d'utilisateur pour entrer des symboles dans un dispositif électronique selon l'une ou plusieurs des revendications 1 à 7 à l'aide d'un procédé selon l'une ou plusieurs des revendications 8 à 14.
